Europäisches Patentamt

European Patent Office

Office européen des brevets

(19)

(11) Veröffentlichungsnummer: **0 160 180**
**A2**

(12) ## EUROPÄISCHE PATENTANMELDUNG

(21) Anmeldenummer: 85102524.7

(22) Anmeldetag: 06.03.85

(51) Int. Cl.⁴: **B 01 D 53/26**
B 01 D 53/04

(30) Priorität: 23.03.84 DE 3410815

(43) Veröffentlichungstag der Anmeldung:
06.11.85 Patentblatt 85/45

(84) Benannte Vertragsstaaten:
BE DE FR GB NL

(71) Anmelder: Linde Aktiengesellschaft
Abraham-Lincoln-Strasse 21
D-6200 Wiesbaden(DE)

(72) Erfinder: Klein, Günter, Dr.phil.
Fliederstrasse 9
D-8027 Neuried(DE)

(72) Erfinder: Wernicke, Hans-Jürgen, Dr.rer.nat.
Böhmerwaldstrasse 37g
D-8192 Geretsried(DE)

(74) Vertreter: Schaefer, Gerhard, Dr.
Linde Aktiengesellschaft Zentrale Patentabteilung
D-8023 Höllriegelskreuth(DE)

(54) Verfahren zur Trocknung eines Gasstromes.

(57) Es wird ein Adsorptionsverfahren zur Trocknung eines Gasstroms vorgeschlagen, bei dem beladene Adsorber im Gegenstrom zur Adsorptionsrichtung durch ein erhitztes Spülgas regeneriert werden. Bei der Trocknung von Gasen, die polymerisationsfähige Komponenten enthalten, ist das Bett in mehrere Schichten mit unterschiedlichem Adsorptionsmittel unterteilt. Die erste vom Gasstrom durchströmte Schicht besteht aus einem Adsorptionsmittel mit einer höheren Adsorptionsfähigkeit für polymerisationsfähige Verbindungen als die nachfolgende Schicht, weist dafür aber höhere mechanische Stabilität auf.

EP 0 160 180 A2

Croydon Printing Company Ltd

## Verfahren zur Trocknung
## eines Gasstromes

Die Erfindung betrifft ein Verfahren zur Trocknung eines Gasstromes, bei dem der Gasstrom während einer Adsorptionsphase dem Eintrittsende eines Adsorbers zugeführt und nach Durchströmen eines Adsorptionsbettes vom Austrittsende des Adsorbers der getrocknete Gasstrom abgezogen wird, und wobei nach Beendigung einer Adsorptionsphase ein über das Austrittsende des Adsorbers zugeführtes Spülgas bei erhöhter Temperatur durch den Adsorber geführt und mit desorbiertem Wasserdampf beladenes Spülgas vom Eintrittsende des Adsorbers abgezogen wird.

Ein Verfahren dieser Art ist aus der DE-AS 20 64 137 bekannt. Die Anwendung eines solchen Verfahrens führt jedoch bei der Trocknung eines Gases, das polymerbildende Komponenten enthält, zu Schwierigkeiten. Solche Komponenten sind beispielsweise ungesättigte Kohlenwasserstoffe oder Aldehyde, die unter anderem in Synthesegasen oder in Spaltgasen enthalten sind. Diese Komponenten werden in der Regel während einer Adsorptionsphase adsorbiert, während der Regenerierung bei erhöhter Temperatur jedoch nicht vollständig desorbiert, da ein Teil von ihnen unter den Regenerierbedingungen zu Polymeren umgesetzt wird. Die dabei gebildeten Polymere belegen die Oberfläche des Adsorptionsmittels, die dadurch nicht mehr genutzt werden kann, so daß die Adsorptionskapazität des Adsorbers abnimmt.

Zur Vermeidung dieses unerwünschten Effekts ist es möglich, ein Adsorptionsmittel zu verwenden, das die Adsorption von polymerbildenden Komponenten verhindert. Hierfür sind insbesondere zeolithische Molekularsiebe des Typs 3A geeignet. Die Verwendung derartiger Adsorptionsmittel ist jedoch häufig nicht möglich, da sie mechanisch sehr empfindlich ist und leicht zu Staub und Bruch zerfallen können.

Beide bekannten Verfahrensweisen erweisen sich als unbefriedigend, da das Adsorptionsmittel schon nach relativ kurzer Zeit erneuert werden muß.

Der Erfindung liegt die Aufgabe zugrunde, ein Verfahren der eingangs genannten Art so auszugestalten, daß es möglich wird, auch Gase, die polymerbildende Komponenten enthalten, in möglichst einfacher und wirtschaftlicher Weise zu trocknen, wobei insbesondere längere Betriebszeiten für einen Adsorber angestrebt werden.

Diese Aufgabe wird dadurch gelöst, daß bei der Trocknung eines Gasstromes, der Komponenten enthält, die unter den Bedingungen des Adsorptionsverfahrens zur Polymerisation neigen, das Adsorptionsbett in mindestens zwei, unterschiedliche Adsorptionsmittel enthaltende Schichten unterteilt ist, wobei die zweite vom Gasstrom durchströmte Schicht aus einem Adsorptionsmittel mit einer geringeren Adsorptionsfähigkeit für polymerisationsfähige Verbindungen besteht als die erste Schicht.

In einem Adsorber sind bezüglich der Wasserbeladung drei Zonen zu unterscheiden, nämlich eine dem Eintrittsbereich des Adsorbers benachbarte Sättigungszone, ferner eine daran anschließende Massenübergangszone und schließlich eine dem Austrittsende benachbarte wasserfreie Zone. Unter Sättigungszone wird dabei der Bereich des Adsorbers verstanden, der bei Beendigung einer Adsorptionsphase bis zur Gleichgewichtsbeladung mit Wasserdampf gesättigt ist, während die Massenübergangszone derjenige Bereich des Adsorbers ist, der am Ende einer Adsorptionsphase teilweise mit Wasserdampf beladen ist. Während der nachfolgenden Regenerierung wird die Massenübergangszone sowie die Sättigungszone zum Eintrittsende des Adsorbers zurückgedrängt, während einer anschließenden Adsorptionsphase wieder vorgeschoben.

Die der Erfindung zugrundeliegende wesentliche Erkenntnis besteht darin, daß die Polymerbildung im Bereich der Sättigungszone gering ist, während sie innerhalb der Massenübergangszone und insbesondere in der wasserfreien Zone hoch ist. Dies ist vermutlich darauf zurückzuführen, daß Wasserdampf stärker adsorbiert wird als die Polymerbildner, so daß bei fortschreitender Sättigung des Adsorbers mit Wasserdampf die zunächst innerhalb der Sättigungszone adsorbierten Polymerbildner vom Wasserdampf verdrängt und in der Massenübergangszone oder der wasserfreien Zone erneut adsorbiert werden. Bei der Verwendung von zeolithischem Molekularsieb als Adsorptionsmittel tritt bei der Regenerierung der zusätzliche Effekt auf, daß das Molekularsieb eine katalytische Aktivität für die Polymerbildung aufweist, die bei zunehmender Wasserbeladung des Molekularsiebs abnimmt.

-.-

Wegen der unterschiedlichen Tendenz zur Polymerbildung ist es möglich, innerhalb der einzelnen Bereiche des Adsorbers unterschiedliche Adsorptionsmittel einzusetzen, deren Eigenschaften jeweils den besonderen Erfordernissen in den einzelnen Zonen angepaßt sind. In Bereichen mit hoher Wasserbeladung können somit Adsorptionsmittel eingesetzt werden, deren Neigung zur Polymerbildung zwar relativ hoch ist, die aber andere, wichtige Vorteile haben, beispielsweise eine hohe mechanische Beständigkeit. In Bereichen niedriger Wasserbeladung und in der wasserfreien Zone ist es dagegen zweckmäßig, ein Trocknungsmittel mit geringer Neigung zur Polymerbildung einzusetzen, um die Adsorptionsfähigkeit des Trockners möglichst lange zu erhalten, d.h. um eine schnelle Abnahme der Wasseraufnahmekapazität durch die Ablagerung von Polymeren zu vermeiden. Unter dem Bereich hoher Wasserbeladung wird dabei die Zone verstanden, die während der Adsorption bis zu mindestens 50 % der unter den Adsorptionsbedingungen erreichbaren Gleichgewichtsbeladung mit Wasser beladen wird, insbesondere fällt die Sättigungszone in diesen Bereich. Die in diesem Bereich eingesetzten Adsorptionsmittel sollen hinsichtlich ihrer Stabilität insbesondere gegen hydrothermale Schädigung und mechanischen Zerfall infolge von Desorptionskälte, eventuell bei gleichzeitiger Anwesenheit kondensierender Desorbate, höheren Anforderungen genügen als die in der zweiten Zone eingesetzten Adsorptionsmittel.

Weitere Einzelheiten der Erfindung werden nachfolgend anhand der Zeichnung erläutert.

Es zeigen:

Figuren 1 bis 3  Diagramme, die in qualitativer Form die Vorgänge innerhalb eines Adsorbers demonstrieren, und

Figur 4 eine schematische Darstellung einer für die Durchführung des Verfahrens geeigneten Adsorptionsanlage.

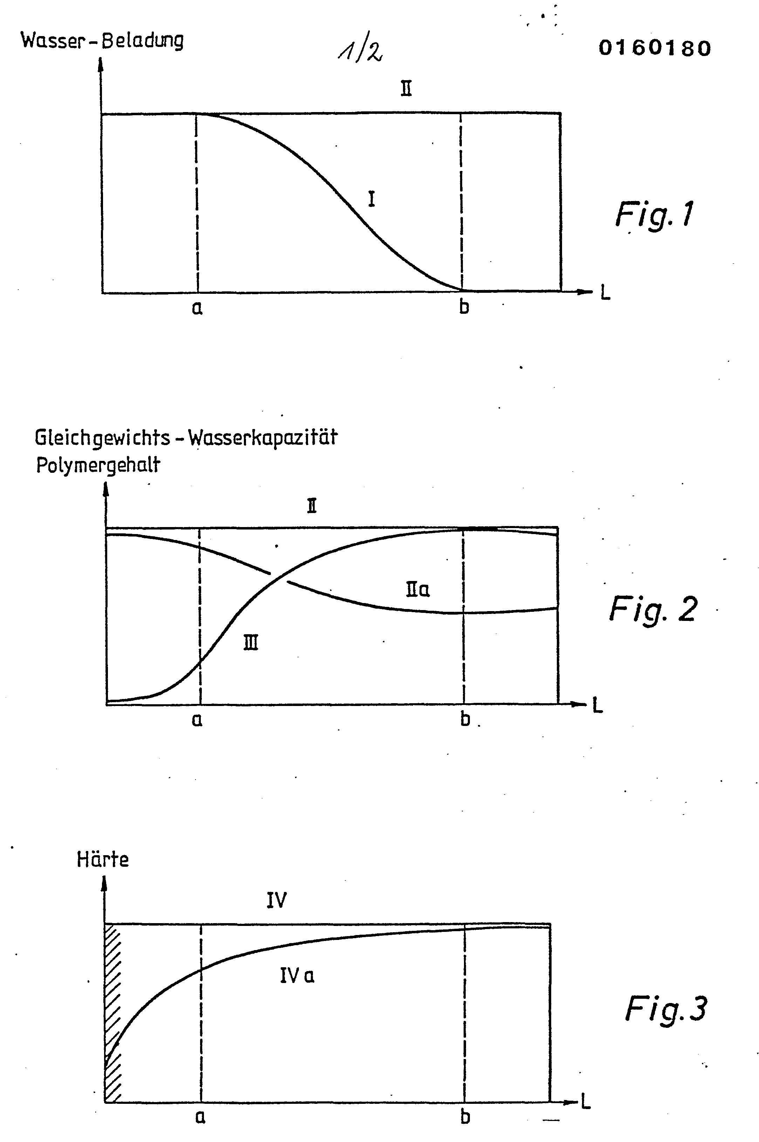

Bei den in den Figuren 1 bis 3 dargestellten Diagrammen ist auf der Abszisse jeweils die Adsorberlänge L dargestellt, wobei in jedem Fall davon ausgegangen wird, daß während einer Adsorptionsphase das zu reinigende Gas von links in den Adsorber eingeführt wird, so daß das gereinigte Produktgas rechts wieder austritt. Das Regeneriergas wird im Gegenstrom dazu geführt, tritt also rechts in den Adsorber ein und links wieder aus.

Beim Diagramm der Figur 1 ist als Ordinate die Wasserbeladung eines Adsorbers zum Abschluß einer Adsorptionsphase dargestellt. Vom Eintrittsende bis zur gestrichelt dargestellten Linie a ist der Adsorber vollständig mit Wasserdampf gesättigt, dieser Bereich, der üblicherweise zwischen 10 und 60 % der Adsorberlänge ausmacht, ist die Sättigungszone des Adsorbers. Die nachfolgende Massenübergangszone liegt zwischen den gestrichelten Linien a und b. In ihr fällt die Wasserbeladung vom Sättigungswert bis auf einen durch die Regenerierbedingungen vorgegebenen tiefsten Restwert ab. Die Linie b stellt somit das äußerste Vordringen der Adsorptionsfront im Adsorber dar. Der austrittsseitig folgende Bereich bleibt beim Normalbetrieb des Adsorptionsverfahrens ständig wasserfrei und stellt eine Sicherheitszone dar, damit auch bei Betriebsstörungen oder schwankenden Einsatzbedingungen sichergestellt ist, daß wasserfreies Produktgas abgegeben wird. Die durch die Linie I gekennzeichnete Wasserbeladungsfront wird während einer Regenerierung nach links, d.h. zum Eintrittsende des Adsorbers, zurückgeschoben und bei einer nachfolgenden Adsorptionsphase wieder bis in die dargestellte Position vorgerückt. Die Kurve II entspricht der Gleichgewichts-Wasserkapazität des Adsorptionsmittels, die bei vollständiger Sättigung des Adsorbers mit Wasserdampf erreicht werden kann. Dieser Kurve kann im praktischen Adsorptionsbetrieb jedoch nicht gefolgt werden, da sie einem Vorrücken der Linie a bis zum Adsorberaustrittsende entspräche, was zur Folge hätte, daß schon lange vor Erreichen dieses Zustandes mit Wasserdampf beladenes Produktgas abgegeben würde.

In der Figur 2 ist bei einem üblichen Adsorber, der beispielsweise zeolithisches Molekularsieb des Typs 4A enthält, die Gleichgewichts-Wasserkapazität und der Polymergehalt nach längerem Betrieb zur Trocknung eines Synthesegases dargestellt. Während die Linie II wiederum der Gleichgewichts-Wasserkapazität eines neu in Betrieb genommenen Adsorbers entspricht, zeigt die Linie IIa die Abnahme der Gleichgewichts-Wasserkapazität nach längerem Betrieb. Es ist klar ersichtlich, daß innerhalb der Sättigungszone nur eine geringe Abnahme der Wasserkapazität erfolgt, während die Massenübergangszone und die wasserfreie Zone eine starke Beeinträchtigung ihrer Wasserkapazität erfahren haben. Einen diesem Verhalten genau entsprechenden Verlauf zeigt die Konzentration an Polymeren innerhalb des Adsorbers. Während der neu in Betrieb genommene Adsorber polymerfrei ist, steigt der Polymergehalt bei längerer Betriebszeit entsprechend der Kurve III von einem geringen Wert innerhalb der Sättigungszone auf hohe Werte innerhalb der Massenübergangszone und insbesondere der wasserfreien Zone.

In der Figur 3 ist schließlich der typische Verlauf der Härte eines Adsorptionsmittels, insbesondere von zeolithischem Molekularsieb des Typs 3A, dargestellt. Während die Linie IV der Härte des frisch eingefüllten Adsorptionsmittels entspricht, gibt die Linie IVa den Verlauf nach längerer Betriebszeit wieder. Wie deutlich erkenn-

-.-

bar ist, nimmt die Härte und damit die mechanische Stabilität insbesondere im Bereich der Sättigungszone stark ab, was beispielsweise auf hydrothermale Schädigung und mechanischen Zerfall infolge von Desorptionskälte, eventuell bei gleichzeitiger Anwesenheit kondensierender Desorbate, zurückzuführen ist. Im Eintrittsbereich des Adsorbers kommt es deshalb bei Verwendung eines mechanisch nicht beständigen zeolithischen Molekularsiebs, beispielsweise des Typs 3A, nach längerer Betriebszeit zu Bruch- und Staubbildung, was in Figur 3 durch die Schraffur angedeutet ist. Dies hat unter anderem den Nachteil, daß bei der Gegenstromregenerierung des Adsorbers ein Staubaustrag erfolgen kann, der wiederum in nachfolgenden Anlagenteilen zu Verlegungen führen kann.

Erfindungsgemäß ist nun vorgesehen, im Eintrittsbereich, insbesondere innerhalb der Sättigungszone, ein Adsorptionsmittel vorzusehen, das eine hohe mechanische Stabilität aufweist, dessen Härteverlauf nach längerer Betriebszeit also nicht oder weniger ausgeprägt der durch Kurve IVa in Figur 3 gezeigten Abhängigkeit unterliegt. Ein dafür geeignetes Adsorptionsmittel ist beispielsweise zeolithisches Molekularsieb vom Typ 4A, doch kommen auch andere Adsorptionsmittel wie beispielsweise Alugel, Silikagel oder andere Molekularsiebe hierfür in Frage. Da diese Adsorptionsmittel jedoch innerhalb der Massenübergangszone sowie der wasserfreien Zone entsprechend den in Figur 2 gezeigten Kurven zu ungünstigen Ergebnissen führen würden, nämlich zu einer relativ geringen Lebensdauer einer Adsorptionsmittelfüllung infolge der hohen Abnahme der Wasserkapazität und zu einem hohen Energieaufwand, da Trockner mit abnehmender Wasserkapazität häufiger regeneriert werden müssen, ist weiterhin erfindungsgemäß vorgesehen, daß in diesem Bereich ein Adsorptionsmittel zum Einsatz kommt, das keine oder höchstens eine sehr geringe Neigung zur Adsorption von polymerbildenden Komponenten aufweist. Hierfür ist insbesondere zeolithisches Molekularsieb vom Typ 3A vorgesehen.

Die erfindungsgemäße mehrschichtige Befüllung eines Adsorbers ist insbesondere dann vorteilhaft, wenn die Adsorber unter hohem Druck regeneriert werden müssen, da bei der Gegenstrom-Druckregenerierung die mechanische Beanspruchung des Trockenmittels innerhalb der Sättigungszone durch Akkumulation und teilweise Kondensation der desorbierenden Komponenten besonders hoch ist.

Bei der praktischen Durchführung des Adsorptionsverfahrens sind stets mindestens zwei Adsorber vorgesehen, wobei stets ein Adsorber in einer Adsorptionsphase ist, während der andere regeneriert wird. Nach Beendigung der Adsorptionsphase für einen Adsorber wird das zu trocknende Rohgas dann auf den anderen, zuvor regenerierten Adsorber gegeben, und der Betrieb wird im zyklischen Wechsel fortgesetzt.

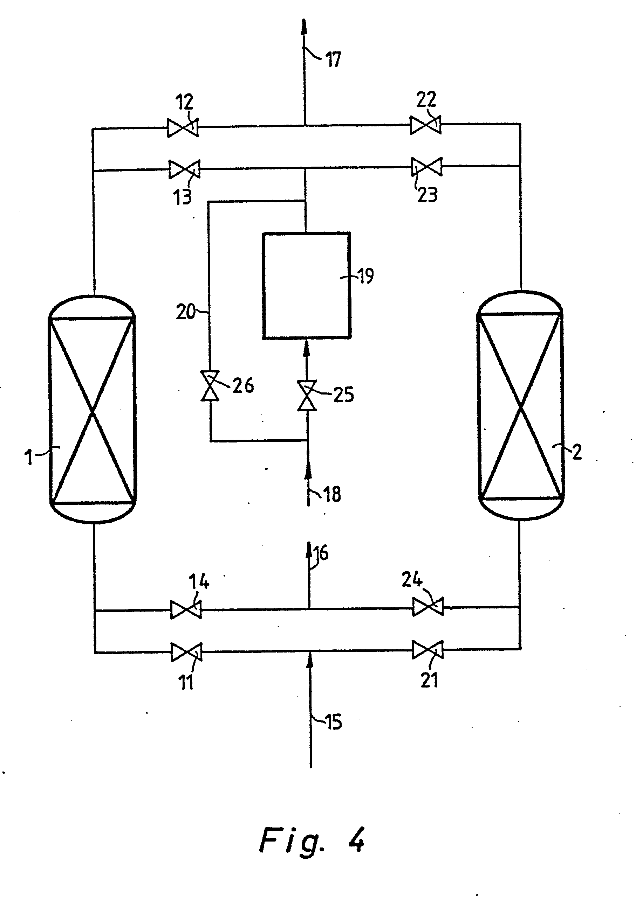

Die in Figur 4 schematisch dargestellte Anlage zur Durchführung des Verfahrens enthält zwei Adsorber 1 und 2, die auf ihrer Eintrittsseite über Ventile 11 und 14, bzw. 21 und 24 mit einer Rohgasleitung 15 bzw. einer Restgasleitung 16 verbunden sind. Austrittsseitig sind die Adsorber über Ventile 12 und 13 bzw. 22 und 23 mit einer Produktgasleitung 17 bzw. einer Regeneriergas-Zuführleitung 18 verbunden. In der Regeneriergas-Zuführleitung 18 ist ein Erhitzer 19 vorgesehen, der durch die Bypass-Leitung 20 umgangen werden kann. Hierfür sind Ventile 25 und 26 vorgesehen.

-.-

Beim Betrieb der Anlage wird über Leitung 15 herangeführtes Rohgas bei geschlossenem Ventil 21 über das dann geöffnete Ventil 11 zum Adsorber 1 geführt und beim Durchströmen des Adsorbers getrocknet. Das Produktgas tritt bei geschlossenem Ventil 13 über das offene Ventil 12 in die Produktgasleitung 17 ein.

Gleichzeitig wird der Adsorber 2, der zuvor mit Wasserdampf beladen wurde, regeneriert. Hierzu wird Regeneriergas über Leitung 18 herangeführt und tritt zunächst bei geschlossenem Ventil 26 und geöffnetem Ventil 25 in den Erhitzer 19 ein, in dem es auf die Regeneriergastemperatur, die beispielsweise zwischen 100 und 200 °C liegt, erhitzt wird. Das heiße Regeneriergas tritt anschließend durch das geöffnete Ventil 23 ins Austrittsende des Adsorbers 2 ein und bewirkt infolge seiner hohen Temperatur die Desorption des zuvor adsorbierten Wasserdampfes. Mit Wasserdampf angereichertes Regeneriergas tritt am Austrittsende des Adsorbers aus und gelangt über das geöffnete Ventil 24 in die Restgasleitung 16. Nach Beendigung der Desorptionsphase muß der Adsorber 2 wieder auf Adsorptionstemperatur, also beispielsweise auf Umgebungstemperatur, zurückgekühlt werden. Hierzu wird weiteres Spülgas verwendet, das jedoch bei geschlossenem Ventil 25 und geöffnetem Ventil 26 über die Bypass-Leitung 20 am Erhitzer 10 vorbeigeführt wird.

Die Regenerierung, d.h. die Heizphase und die nachfolgende Kühlphase des einen Adsorbers und die Adsorptionsphase des jeweils anderen Adsorbers sind zeitlich aufeinander abgestimmt. Nach Beendigung der Adsorptionsphase im Adsorber 1 und der Regenerierung im Adsorber 2 wird der Rohgasstrom 15 durch Schließen der Ventile 11, 12, 23 und 24 sowie Öffnen der Ventile 21 und 22 durch den Adsorber 2 geführt, während für den Adsorber 1 eine Regenerierphase beginnt.

- 1 -

0160180

Patentansprüche

1. Verfahren zur Trocknung eines Gasstromes, bei dem der Gasstrom während einer Adsorptionsphase dem Eintrittsende eines Adsorbers zugeführt und nach Durchströmen eines Adsorptionsbettes vom Austrittsende des Adsorbers der getrocknete Gasstrom abgezogen wird, und wobei nach Beendigung einer Adsorptionsphase ein über das Austrittsende des Adsorbers zugeführtes Spülgas bei erhöhter Temperatur durch den Adsorber geführt und mit desorbiertem Wasserdampf beladenes Spülgas vom Eintrittsende des Adsorbers abgezogen wird, dadurch gekennzeichnet, daß bei der Trocknung eines Gasstroms, der Komponenten enthält, die unter den Bedingungen des Adsorptionsverfahrens zur Polymerisation neigen, das Adsorptionsbett in mindestens zwei, unterschiedliche Adsorptionsmittel enthaltende Schichten unterteilt ist, wobei die zweite vom Gasstrom durchströmte Schicht aus einem Adsorptionsmittel mit einer geringeren Adsorptionsfähigkeit für polymerisationsfähige Verbindungen besteht als die erste Schicht.

2. Verfahren nach Anspruch 1, dadurch gekennzeichnet, daß die erste Schicht innerhalb der Zone des Adsorbers liegt, die bei der Adsorption eine Wasserbeladung von mindestens 50 % der unter den Adsorptionsbedingungen erreichbaren Gleichgewichts-Wasserbeladung erreicht.

3. Verfahren nach Anspruch 1, dadurch gekennzeichnet, daß die erste Schicht innerhalb der Zone des Adsorbers liegt, die bei der Adsorption mit Wasserdampf gesättigt wird.

4. Verfahren nach einem der Ansprüche 1 bis 3, dadurch gekennzeichnet, daß sich die erste Schicht über 10 bis 60 % der Adsorberlänge erstreckt.

5. Verfahren nach einem der Ansprüche 1 bis 4, dadurch gekennzeichnet, daß die erste Schicht aus einem mechanisch und/oder thermisch stabileren Adsorptionsmittel besteht als nachfolgende Schichten.

6. Verfahren nach einem der Ansprüche 1 bis 5, dadurch gekennzeichnet, daß die erste Schicht des Adsorptionsbettes aus zeolithischem Molekularsieb des Typs 4A und die zweite Schicht aus zeolithischem Molekularsieb des Typs 3A besteht.

Fig. 1

Fig. 2

Fig. 3

Fig. 4